# EUROPÄISCHE PATENTSCHRIFT

(11) **EP 4 262 378 B1**
(45) Veröffentlichungstag und Bekanntmachung des Hinweises auf die Patenterteilung: **28.01.2026**
(21) Anmeldenummer: 21778499.0
(22) Anmeldetag: 22.09.2021
(51) Int. Cl.: A01M 7/00

(54) **VERFAHREN ZUM AUSBRINGEN EINES SPRITZMITTELS AUF EINE LANDWIRTSCHAFTLICHE FLÄCHE**
METHOD FOR APPLYING A SPRAY ONTO AGRICULTURAL LAND
PROCÉDÉ D'APPLICATION D'UNE PULVÉRISATION SUR TERRAIN AGRICOLE

(30) Priorität: 15.12.2020 DE 102020215874
(43) Veröffentlichungstag der Anmeldung: 25.10.2023
(73) Patentinhaber: Robert Bosch GmbH, 70442 Stuttgart (DE)
(72) Erfinder: HOUIS, Nicolas, 74321 Bietigheim-Bissingen (DE)
(86) Internationale Anmeldenummer: PCT/EP2021/076078
(87) Internationale Veröffentlichungsnummer: WO 2022/128189

(56) Entgegenhaltungen:
- AU-A1- 2018 224 459
- CA-A1- 3 125 889
- DE-A1- 102018 221 468
- DE-A1- 102019 203 394
- US-B1- 10 255 670
- US-B2- 10 694 734
- US-B2- 10 721 859
- ESAU TRAVIS ET AL: "Machine vision smart sprayer for spot-application of agrochemical in wild blueberry fields", PRECISION AGRICULTURE, SPRINGER US, BOSTON, vol. 19, no. 4, 3 January 2018 (2018-01-03), pages 770 - 788, XP036537166, ISSN: 1385-2256, [retrieved on 20180103], DOI: 10.1007/S11119-017-9557-Y

## Beschreibung

### Stand der Technik

Die Erfindung betrifft ein Verfahren zum Ausbringen eines Spritzmittels auf eine landwirtschaftliche Fläche mittels zumindest einer Spritzdüseneinheit einer landwirtschaftlichen Spritzvorrichtung sowie eine Steuereinheit und eine landwirtschaftliche Spritzvorrichtung zum Ausbringen eines Spritzmittels nach Gattung der unabhängigen Ansprüche.

Algorithmen zur Pflanzreihenerkennung sind bekannt. Die Basis hierfür sind in den meisten Fällen Kameraaufnahmen, welche von einer Feldmaschine aus gemacht wurden. Diese Aufnahmen sind mit starken Neigungswinkeln aufgenommen und zeigen einen möglichst großen Bildabschnitt, um die Detektion von Pflanzreihen möglichst zu vereinfachen.

Ferner sind Verfahren zur Unkrautdetektion und -klassifikation bekannt, welche unter Verwendung hochauflösender kleiner Bilder und vorzugsweise ohne Neigungswinkel durchgeführt werden, um eine ausreichende Bildauflösung für die Detektion kleiner Pflanzenobjekte zu erhalten.

Um eine korrekte Pflanzenerkennung zu gewährleisten und ggf. auch Störfaktoren zu kompensieren, müssen sich hierbei aufeinanderfolgende Bilder bzw. Auswertebereiche in den Bildern "überlappen". Je höher die Geschwindigkeit der Arbeitsmaschine, desto höher muss die Wiederholrate werden, um den gewählten bzw. vorgegebenen Überlapp zwischen in Fahrtrichtung aufeinanderfolgenden Auswerteregionen einzustellen.

Die US 10 721 859 B2 offenbart ein Verfahren zum Ausbringen eines Pflanzenschutzmittels.

Aus der DE 10 2018 217 742 A1 ist ein Verfahren zum Ausbringen eines Pflanzenschutzmittels bekannt, bei dem ein Auswerteabschnitt eine vorgegeben konstante Länge aufweist, welcher kleiner ist als die Länge eines zugehörigen erfassten Feldabschnitts. Hierbei wird die Position des vorgegebenen Auswerteabschnitts in dem Feldabschnitt in Abhängigkeit von einer Fahrgeschwindigkeit der Spritzvorrichtung gewählt.

### Offenbarung der Erfindung

Gegenstand der vorliegenden Erfindung ist ein Verfahren zum Ausbringen eines Spritzmittels auf eine landwirtschaftliche Fläche mittels zumindest einer Spritzdüseneinheit einer landwirtschaftlichen Spritzvorrichtung, mit den Schritten:
- Erfassen eines Feldabschnitts der landwirtschaftlichen Fläche mittels zumindest einer optischen Erfassungseinheit, um eine Bildinformation von dem Feldabschnitt mit einer in Fahrtrichtung der Spritzvorrichtung Tiefe T(Bild) zu erhalten;
- Identifizieren von Pflanzen in einem Bildauswertebereich der erhaltenen Bildinformation mittels einer Steuereinheit, wobei der Bildauswertebereich einen entsprechenden Feldauswertebereich des erfassten Feldabschnitts mit einer in Fahrtrichtung der Spritzvorrichtung Tiefe T(Auswerte) repräsentiert; und
- Ausbringen des Spritzmittels auf den Feldauswertebereich des erfassten Feldabschnitts in Abhängigkeit von den im Bildauswertebereich identifizierten Pflanzen mittels der Spritzdüseneinheit der landwirtschaftlichen Spritzvorrichtung,
wobei der folgende weitere Schritt vorgesehen ist:
- Wählen einer variablen Tiefe T(Auswerte) des Bildauswertebereichs mittels der Steuereinheit.

Gegenstand der vorliegenden Erfindung ist ferner eine Steuereinheit die dazu eingerichtet ist, folgende Schritte durchzuführen und/oder zu steuern:
- Identifizieren von Pflanzen in einem Bildauswertebereich einer erhaltenen Bildinformation eines erfassten Feldabschnitts einer landwirtschaftlichen Fläche mit einer in Fahrtrichtung einer Spritzvorrichtung Tiefe T(Bild), wobei der Bildauswertebereich einen entsprechenden Feldauswertebereich des erfassten Feldabschnitts mit einer in Fahrtrichtung der Spritzvorrichtung Tiefe T(Auswerte) repräsentiert;
- Ausgeben eines Steuersignals an zumindest eine Spritzdüseneinheit einer landwirtschaftlichen Spritzvorrichtung in Abhängigkeit von den im Bildauswertebereich identifizierten Pflanzen, um das Spritzmittel auf den Feldauswertebereich des erfassten Feldabschnitts auszubringen,
wobei die Steuereinheit ferner dazu eingerichtet ist, den folgenden weiteren Schritt durchzuführen und/oder zu steuern:
- Wählen einer variablen Tiefe T(Auswerte) des Bildauswertebereichs, insbesondere in Abhängigkeit von einer Geschwindigkeit der landwirtschaftlichen Spritzvorrichtung in Fahrtrichtung.

Gegenstand der vorliegenden Erfindung ist außerdem eine landwirtschaftliche Spritzvorrichtung zum Ausbringen eines Spritzmittels auf eine landwirtschaftliche Fläche mit zumindest einer Spritzdüseneinheit, zumindest einer optischen Erfassungseinheit, insbesondere wobei eine optische Achse der optischen Erfassungseinheit einen Neigungswinkel größer 0° relativ zu der Vertikalen in Fahrtrichtung der Spritzvorrichtung aufweist, und einer vorangehend beschriebenen Steuereinheit.

Gegenstand der vorliegenden Erfindung ist schließlich ein Computerprogramm das dazu eingerichtet ist, die Schritte eines vorangehend beschriebenen Verfahrens und/oder einer vorangehend beschriebenen Steuereinheit auszuführen und/oder zu steuern, wenn das Computerprogramm auf einem Computer ausgeführt wird, sowie ein maschinenlesbares Speichermedium mit dem darauf gespeicherten Computerprogramm.

Das Verfahren ist für landwirtschaftliche Zwecke gedacht, jedoch nicht darauf beschränkt. Unter einem landwirtschaftlichen Zweck kann im Rahmen der vorliegenden Erfindung ein Zweck verstanden werden, der auf eine wirtschaftliche Kultivierung von Nutzpflanzen gerichtet ist.

Das Ausbringen des Spritzmittels erfolgt hierbei auf einer landwirtschaftlichen Fläche bzw. einer landwirtschaftlich genutzten Fläche. Hierunter können ein Feld oder eine Anbaufläche für Pflanzen oder auch eine Parzelle einer solchen Anbaufläche verstanden werden. Die landwirtschaftliche Fläche kann somit eine Ackerfläche, ein Grünland oder eine Weide sein. Die Pflanzen können beispielsweise Nutzpflanzen, deren Frucht landwirtschaftlich genutzt wird (beispielsweise als Nahrungsmittel, Futtermittel oder als Energiepflanze) sowie Beikräuter, Unkräuter und Ungräser umfassen.

Bevorzugt werden alle Schritte des Verfahrens während einer Bewegung, insbesondere einer Fahrt oder eines Fluges der landwirtschaftlichen Spritzvorrichtung über der landwirtschaftlichen Fläche durchgeführt. Somit kann im Rahmen der vorliegenden Anmeldung je nach Ausgestaltung der Spritzvorrichtung unter dem Begriff "Fahrtrichtung" auch eine "Flugrichtung" verstanden werden.

Vorteilhafterweise ist die landwirtschaftliche Spritzvorrichtung ausgebildet, das Verfahren automatisiert und/oder autonom durchzuführen, um eine schnelle, zuverlässige und effiziente Behandlung eines Feldes zu ermöglichen.

Die landwirtschaftliche Spritzvorrichtung kann insbesondere Teil einer landwirtschaftlichen Feldspritze bzw. eines Pflanzenschutzgerätes sein oder als eine landwirtschaftliche Feldspritze bzw. ein Pflanzenschutzgerät ausgebildet sein. Die landwirtschaftliche Spritzvorrichtung kann eine mobile Einheit umfassen oder auf einer mobilen Einheit angeordnet sein, wobei die mobile Einheit insbesondere als Landfahrzeug und/oder Luftfahrzeug und/oder Anhänger ausgebildet sein kann. Die mobile Einheit kann insbesondere eine landwirtschaftliche Arbeitsmaschine, bspw. eine Zugmaschine, ein Schlepper, eine selbstfahrende bzw. autonome Feldspritze oder ein selbstfahrender bzw. autonomer Roboter sein. Die landwirtschaftliche Spritzvorrichtung kann insbesondere eine gezogene Feldspritze, eine selbstfahrende Feldspritze oder eine Anbaufeldspritze sein. Die landwirtschaftliche Spritzvorrichtung kann auch an einer hydraulischen Vorrichtung einer landwirtschaftlichen Arbeitsmaschine angebaut sein. Denkbar ist auch, dass die landwirtschaftliche Spritzvorrichtung auf einer Ladefläche einer landwirtschaftlichen Arbeitsmaschine aufgebaut ist. Alternativ kann die Spritzvorrichtung an der landwirtschaftlichen Arbeitsmaschine angehängt sein. Die landwirtschaftliche Spritzvorrichtung bzw. die Feldspritze kann mindestens einen Spritzmitteltank zur Aufnahme des Spritzmittels aufweisen. Die landwirtschaftliche Spritzvorrichtung bzw. die Feldspritze kann hierbei auch eine Mischeinheit aufweisen, welche direkt auf der landwirtschaftlichen Spritzvorrichtung ein Spritzmittelkonzentrat mit Wasser zu dem auszubringenden Spritzmittel (an)mischt.

Das Spritzmittel ist insbesondere eine Spritzflüssigkeit. Das Spritzmittel kann ein landwirtschaftliches Präparat bzw. Pflanzenschutzmittel (PSM), insbesondere ein Pflanzenschutzmittelkonzentrat aufweisen oder sein. Das Spritzmittel kann demnach ein Pestizid, wie bspw. ein Herbizid, Fungizid oder ein Insektizid aufweisen. Das Spritzmittel kann jedoch auch ein Düngemittel, insbesondere ein Düngemittelkonzentrat aufweisen oder sein. Das Spritzmittel kann hierbei einen Wachstumsregulator aufweisen. Das Spritzmittel kann ein granulares Wirkmittel, welches mit einer Trägerflüssigkeit vermischt wurde, aufweisen. Die Spritzflüssigkeit kann bspw. ausgebildet sein als: Flüssigkeit, Suspension, Emulsion, Lösung oder eine Kombination daraus. Die Spritzflüssigkeit ist bevorzugt als mit Wasser verdünntes Pflanzenschutzmittel oder mit Wasser verdünntes Düngemittel ausgebildet. Die Spritzflüssigkeit kann demnach bspw. eine Spritzbrühe sein.

Das Ausbringen des Spritzmittels kann insbesondere mittels einer Fördereinheit durchgeführt werden. Hierbei kann die Fördereinheit ausgebildet sein, eine Flüssigkeit und/oder ein Granulat unter Druck zu fördern bzw. zu leiten, insbesondere zu dosieren. Demnach kann die Fördereinheit bspw. jeweils ein/eine/einen oder mehrere Pumpen, Förderpumpen, Dosierpumpen, Druckspeicher, Förderschnecken, Ventile, Blenden etc. umfassen.

Die Spritzdüseneinheit weist bevorzugt jeweils mindestens eine Spritzdüse zum Ausbringen des Spritzmittels und mindestens ein Ventil zum Steuern bzw. Regeln der ausgebrachten Spritzmittelmenge auf. Demnach ist die Spritzdüseneinheit steuerbar bzw. betätigbar ausgebildet. Das Ventil kann in der Spritzdüse angeordnet bzw. integriert sein. Das Ventil kann jedoch auch der Spritzdüse vorgeschaltet, d.h. (in Strömungsrichtung des Spritzmittels) stromaufwärts der Spritzdüse angeordnet sein. Die Spritzdüseneinheit kann jedoch auch mehrere Spritzdüsen mit jeweils einem vorgeschalteten Ventil aufweisen. Die Spritzdüseneinheit kann ferner auch mehrere Spritzdüsen mit nur einem den Spritzdüsen vorgeschalteten Ventil aufweisen, so dass bei Betätigung des Ventils das Spritzmittel mittels aller Spritzdüsen der Spritzdüseneinheit ausgebracht wird. Das Ventil kann als ein pulsweitenmoduliertes Ventil (PWM-Ventil) oder als ein Proportionalventil ausgebildet sein. Die Spritzdüseneinheit kann als Teilbreite eines Düsensystems der landwirtschaftlichen Spritzvorrichtung ausgebildet sein. Die Spritzdüseneinheiten können einzeln bzw. separat und/oder in definierten Gruppen bzw. Verbänden und/oder alle gemeinsam ansteuerbar sein. Die Spritzdüsen jeder Spritzdüseneinheit können einzeln bzw. separat und/oder in definierten Gruppen bzw. Verbänden und/oder alle gemeinsam ansteuerbar sein.

Jeder Feldabschnittreihe (=Feldabschnitte entlang der Bewegungs- bzw. Fahrtrichtung) kann/können eine oder mehrere Spritzdüseneinheit(en) oder Spritzdüse(n) einer Spritzdüseneinheit zugeordnet sein. Bspw. kann jeder Feldabschnittreihe genau eine Spritzdüseneinheit bzw. Spritzdüse einer Spritzdüseneinheit oder genau zwei Spritzdüseneinheiten bzw. Spritzdüsen einer Spritzdüseneinheit zugeordnet sein, um diese zu behandelt.

Die optische Erfassungseinheit ist bevorzugt an der landwirtschaftlichen Spritzvorrichtung angeordnet. Die optische Erfassungseinheit kann zumindest eine multispektrale und/oder hyperspektrale und/oder Infrarot- und/oder Kamera und/oder 3D-Kamera umfassen. Die optische Erfassungseinheit kann ausgebildet sein, Bilder im NIR und/oder visuellen Bereich zu erfassen bzw. aufzunehmen. Die optische Erfassungseinheit kann eine Licht bzw. Beleuchtungseinheit aufweisen. Die optischen Erfassungseinheiten können ausgebildet sein miteinander zu kommunizieren. Jeder Feldabschnittreihe kann eine optische Erfassungseinheit zugeordnet sein. Es ist jedoch auch denkbar, dass eine optische Erfassungseinheit zwei oder mehrere Feldabschnittreihen erfasst. Bevorzugt weist eine optische Achse der mindestens einen optischen Erfassungseinheit einen Neigungswinkel (a) größer 0° relativ zu der Vertikalen in Fahrtrichtung der Spritzvorrichtung aufweist. D.h., mit anderen Worten, dass die optische Erfassungseinheit in Fahrtrichtung nach vorne geneigt ist.

Die Spritzdüseneinheit bzw. die Spritzdüseneinheiten und die optische Erfassungseinheit bzw. die optischen Erfassungseinheiten sind bevorzugt an einem Spritzgestänge der landwirtschaftlichen Spritzvorrichtung angeordnet.

Der Schritt des Erfassens des Feldabschnitts kann bspw. während einer Überfahrt der landwirtschaftlichen Spritzvorrichtung mit der optischen Erfassungseinheit über dem Feld erfolgen. Hierbei können verständlicherweise mehrere Feldabschnitte im Wesentlichen gleichzeitig von mehreren optischen Erfassungseinheiten erfasst werden.

Der erfasste Feldabschnitt kann ein Erfassungsabschnitt bzw. ein erfasster Bildabschnitt einer optischen Erfassungseinheit sein. Der erfasste Feldabschnitt ist bevorzugt der gesamte in dem Sichtfeld der optischen Erfassungseinheit erfasste Feldabschnitt.

Die Bildinformation repräsentiert den erfassten Feldabschnitt. Die Bildinformation ist bevorzugt ein Bild bzw. Abbild des erfassten Feldabschnitts. Die Bildinformation weist in Fahrtrichtung der Spritzvorrichtung eine Tiefe T(Bild) und quer zur Fahrtrichtung der Spritzvorrichtung eine Breite B(Bild) auf.

Das Verfahren wird bzw. die Verfahrensschritte werden verständlicherweise wiederholt durchgeführt. Hierbei werden die Schritte des Erfassens der Feldabschnitte bevorzugt in einem definierten, insbesondere festen oder in einem der Geschwindigkeit der landwirtschaftlichen Spritzvorrichtung angepassten Zeitintervall durchgeführt bzw. wiederholt durchgeführt. D.h., mit anderen Worten, dass die Feldabschnitte mit einer definierten oder einer geschwindigkeitsabhängigen Bildrate bzw. Bildfrequenz (=Wiederholrate) erfasst werden.

Die Pflanzen werden zumindest in dem Bildauswertebereich identifiziert. Die Pflanzen können auch in der gesamten Bildinformation identifiziert werden, bspw. wenn eine Reihenerkennung erfolgen soll. Unter einem Identifizieren von Pflanzen in dem tiefenvariablen Bildauswertebereich einer erhaltenen Bildinformation kann beispielsweise das Bestimmen des Vorhandenseins von Pflanzen in dem Feldabschnitt bzw. dem Feldauswertebereich verstanden werden, insbesondere ohne dass dabei eine Klassifizierung der einzelnen Pflanzen erfolgt. Der Schritt des Identifizierens von Pflanzen kann ein Erfassen eines Farbanteils, insbesondere eines grünen Farbanteils und/oder eines Infrarotanteils in dem Feldabschnitt/Feldauswertebereich bzw. Bildabschnitt/Bildauswertebereich umfassen. Hierbei können mittels der optischen Erfassungseinheit, bspw. anhand eines vorbestimmten NDVI-Wertes (Normalized Differenced Vegetation Index, er wird aus Reflexionswerten im nahen infraroten und sichtbaren roten Wellenlängenbereich des Lichtspektrums gebildet) Pflanzen erfasst werden, indem Biomasse bzw. vitale Pflanzen und Pflanzenteile vom Erdboden unterschieden wird.

Der Bildauswertebereich ist der Bereich der Bildinformation, in dem die Pflanzen identifiziert werden und welcher bspw. zur Ermittlung einer Pflanzenkennzahl mittels der Steuereinheit ausgewertet wird. Der Bildauswertebereich repräsentiert somit einen entsprechenden Feldauswertebereich des erfassten Feldabschnitts. Der Bildauswertebereich weist in Fahrtrichtung der Spritzvorrichtung eine Tiefe T(Auswerte) und quer zur Fahrtrichtung der Spritzvorrichtung eine Breite B(Auswerte) auf. Die Tiefe T(Auswerte) des Bildauswertebereichs ist grundsätzlich kleiner als die Tiefe T(Bild) der Bildinformation, kann jedoch auch gleich groß wie diese sein. Bevorzugt weist der Bildauswertebereich eine minimale Tiefe T(Auswerte,min) von 20 % und/oder eine maximale Tiefe T(Auswerte,max) von 100% der Tiefe T(Bild) der Bildinformation auf. Eine Breite B(Auswerte) des Bildauswertebereichs kann kleiner sein als eine Breite B(Bild) der Bildinformation.

Es sei angemerkt, dass in der Bildinformation weitere separate Bildauswertebereiche vorgesehen sein können, ohne den Rahmen der vorliegenden Erfindung zu verlassen. Die Anzahl der Bildauswertebereiche pro Bildinformation ist abhängig vom Spritzdüsenabstand und der Breite der Bildinformation. Jeder Bildauswertebereich kann jeweils einer Spritzdüseneinheit mit einer oder mehreren Spritzdüsen zugeordnet sein. Bspw. wären bei einer Bildinformationsbreite von 1.5m und 25cm Spritzdüsenabstand 6 Bildauswertebereiche pro Kamera vorgesehen.

Im Schritt des Ausbringens wird bei einer positiven "Spritzentscheidung" das Spritzmittel auf den Feldauswertebereich des erfassten Feldabschnitts in Abhängigkeit von den im Bildauswertebereich identifizierten Pflanzen bzw. der ermittelten Pflanzenkennzahl mittels der Spritzdüseneinheit der landwirtschaftlichen Spritzvorrichtung, bevorzugt mit einer definierten Mindestmenge pro Fläche ausgebracht. Hierbei wird das Spritzmittel bevorzugt auf den gesamten Feldauswertebereich ausgebracht. Die Feldauswertebereiche, auf denen Spritzmittel mit der definierten Mindestmenge pro Fläche ausgebracht wird, werden nachfolgend auch bespritzte bzw. behandelte Feldauswertebereiche bezeichnet.

Bevorzugt ist ein Schritt des Ermittelns einer Pflanzenkennzahl für den Bildauswertebereich unter Verwendung der identifizierten Pflanzen in dem Bildauswertebereich mittels der Steuereinheit vorgesehen, wobei im Schritt des Ausbringens das Spritzmittel auf den Feldauswertebereich in Abhängigkeit von der ermittelten Pflanzenkennzahl, insbesondere bei Erreichung und/oder Unterschreitung und/oder Überschreitung eines definierten Schwellenwertes für die Pflanzenkennzahl ausgebracht wird.

Die Pflanzenkennzahl repräsentiert bzw. ist bevorzugt einen Bedeckungsgrad des entsprechenden Feldauswertebereichs von pflanzlichem Material und/oder eine Menge an pflanzlichem Material in dem jeweiligen Feldauswertebereich und/oder eine Anzahl von identifizierten Pflanzen in dem jeweiligen Feldauswertebereich. Der Bedeckungsgrad kann über das Verhältnis von durch pflanzlichem Material bedeckter Fläche zu gesamter auszuwertenden Fläche definiert werden. Der Bedeckungsgrad für den Feldauswertebereich ist demnach das Verhältnis der Fläche des bewachsenen Bereiches zum jeweiligen gesamten Bildauswertebereich. Dazu kann die Anzahl der Pixel in dem jeweiligen Bildauswertebereich bestimmt werden, an denen pflanzliches Material detektiert wird. Demnach kann mittels der Pflanzenkennzahl eine Maßzahl für den Befall abgeleitet werden, in Abhängigkeit derer entschieden wird, ob und ggf. wie (bspw. mit welcher Ausbringmenge) der entsprechende Feldauswertebereich bespritzt bzw. behandelt wird.

Der Schwellenwert kann manuell eingebbar, ein zuvor festgelegter und an das System übertragener, oder ein voreingestellter Wert und auf dem System fest eingestellter Wert sein. In Abhängigkeit der Kultur im Feld, des Wachstumsstadiums und des verwendeten Spritzmittel bzw. Pflanzenschutzmittels kann hierbei eine sog. Spritzregel hinterlegt sein, d.h. ein Zusammenhang zwischen einer bestimmten Pflanzenkennzahl und der Entscheidung, ob und wieviel Pflanzenschutzmittel appliziert werden soll. Als Beispiel könnte die Regel lauten: "Wenn der Bedeckungsgrad im Pflanzenauswertebereich 0,5% übersteigt, dann wird auf den Feldauswertebereich appliziert".

Bevorzugt kann ein Schritt des Identifizierens von Pflanzenreihen in dem Bildauswertebereich und/oder der Bildinformation unter Verwendung der identifizierten Pflanzen in der gesamten Bildinformation mittels der Steuereinheit vorgesehen sein, wobei im Schritt des Ausbringens das Spritzmittel ferner in Abhängigkeit von identifizierten Pflanzenreihen ausgebracht wird. Der Schritt des Identifizierens bzw. Erkennens von Pflanzenreihen kann durchgehend bzw. permanent durchgeführt werden. Der Schritt des Identifizierens von Pflanzenreihen erfolgt bevorzugt unter Verwendung und/oder Auswertung der gesamten bzw. im Wesentlichen gesamten erhaltenen Bildinformation, d.h. über die gesamte Tiefe T(Bild).

Vorteilhafterweise kann das Identifizieren der Pflanzenreihe unter Verwendung zumindest einer der folgenden Informationen erfolgen: Farbanteil, insbesondere grüner Farbanteil der erfassten Pflanzen, Infrarotanteil der erfassten Pflanzen, Pflanzenabstand, Pflanzreihenabstand, Wachstumsstadium der Pflanzen, Geokoordinaten einer Aussaat der Pflanzen. Mittels dieser Informationen bzw. Eigenschaften können die Pflanzenreihen auf einfache und sichere Art und Weise identifiziert werden. Da sich Pflanzenreihen im Wesentlichen geradlinig erstrecken, kann die Identifizierung einer Pflanzenreihe auch bspw. durch Einpassung einer Geraden bzw. einer geradlinigen Pflanzenreihenmittelpunktlinie in eine Bildtrajektorie mit dem höchsten grünen Farbanteil bzw. Grünwert erfolgen. In dem Schritt des Identifizierens werden bevorzugt alle Pflanzenreihen in dem erfassten Feldabschnitt identifiziert.

Die Steuereinheit kann eine Recheneinheit oder eine Vielzahl von Recheneinheiten zum Verarbeiten von Signalen oder Daten, zumindest eine Speichereinheit zum Speichern von Signalen oder Daten, zumindest eine Kommunikationsschnittstelle zum Einlesen von Daten, insbesondere zum Empfangen von Bildinformationen und zum Ausgeben von Daten, insbesondere Steuersignalen an eine Einheit, insbesondere einen Aktor. Jeder optischen Erfassungseinheit kann eine Recheneinheit zugeordnet sein bzw. jede optische Erfassungseinheit kann eine eigene Recheneinheit aufweisen. Die Recheneinheit ist bzw. die Recheneinheiten sind zur Bildverarbeitung ausgebildet bzw. eingerichtet, sodass sie Berechnungsschritte bzw. Bildverarbeitungsschritte zur Durchführung des erfindungsgemäßen Verfahrens ausführen kann. Demnach weist jede Recheneinheit eine entsprechende Bildverarbeitungssoftware auf. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten bspw. elektrisch oder optisch aus einer entsprechenden Datenübertragungsleitung einlesen oder in eine entsprechende Datenübertragungsleitung ausgeben kann.

Demnach kann das erfindungsgemäße Verfahren beispielsweise in Software oder Hardware oder in einer Mischform aus Software und Hardware in der Steuereinheit bzw. einem Steuergerät implementiert sein.

Die Steuereinheit kann vollständig oder teilweise an der landwirtschaftlichen Spritzvorrichtung angeordnet bzw. in diese integriert sein. Die Steuereinheit kann jedoch auch vollständig oder teilweise extern, bspw. in einer Cloud integriert sein.

Erfindungsgemäß ist die Tiefe T(Auswerte) des Bildauswertebereichs mittels der Steuereinheit variabel wählbar bzw. einstellbar. D.h., mit anderen Worten, dass der Bildauswertebereich tiefenvariabel ist. Unter einem "variablen Wählen" einer Tiefe soll im Rahmen der vorliegenden Anmeldung das Wählen bzw. Einstellen eines Wert für die Tiefe verstanden werden. Vorteilhafterweise wird die Tiefe T(Auswerte) des Bildauswertebereichs in Abhängigkeit von einer Geschwindigkeit der landwirtschaftlichen Spritzvorrichtung in Fahrtrichtung mittels der Steuereinheit gewählt. D.h., mit anderen Worten, dass die Tiefe T(Auswerte) bei erhöhter Fahrgeschwindigkeit ebenfalls erhöht wird. Alternativ oder zusätzlich wird die Tiefe T(Auswerte) des Bildauswertebereichs bevorzugt in Abhängigkeit von einer Bildrate erfasster Feldabschnitte und/oder eine Temperatur der Steuereinheit zusammenhängenden Größe mittels der Steuereinheit gewählt.

Die Wahl der Tiefe T(Auswerte) kann entweder innerhalb einer nachgelagerten Bildverarbeitungssoftware der Recheneinheit oder, wenn durch die optische Erfassungseinheit bzw. Kamera unterstützt, direkt als ROI-Definition (region of interest) auf Ebene des Imagerchips der optischen Erfassungseinheit bzw. Kamera erfolgen.

Wie einleitend erläutert, muss zur Erhaltung einer (vorgegebenen) "Überlappung" der Bildauswertebereiche die Bildrate erhöht werden, bspw. bei einer Erhöhung der Fahrgeschwindigkeit. Eine Erhöhung der Bildrate erhöht jedoch die Anzahl der Rechenoperationen massiv, da die meisten Operationen auf das gesamte Bild angewendet werden, was wiederum zu einer unerwünschten Erhöhung der Energieaufnahme und damit einhergehenden thermischen Last führt. Durch das erfindungsgemäße Verfahren ist es nunmehr möglich, durch Anpassung der Tiefe T(Auswerte) die Bildrate konstant zu halten oder sogar zu reduzieren, um dadurch die Energieaufnahme und thermischen Last im Wesentlichen konstant zu halten bzw. zu reduzieren. Somit kann bspw. bei erhöhter Geschwindigkeit die Tiefe T(Auswerte) des Bildauswertebereichs vergrößert bzw. verlängert werden, um den Überlapp zu erhalten, ohne dabei die Bildrate zu verändern.

Es ist vorteilhaft, wenn ein in Fahrtrichtung der landwirtschaftlichen Spritzvorrichtung hinterer Rand des Bildauswertebereichs mit einem in Fahrtrichtung der landwirtschaftlichen Spritzvorrichtung hinteren Rand der Bildinformation fluchtet. D.h., mit anderen Worten, dass sich die Ränder überlagern. Durch diese Maßnahme ergibt sich ein maximal wählbarer Tiefenbereich für T(Auswerte), d.h. eine maximale Tiefe T(Auswerte,max).

Alternativ ist es vorteilhaft, wenn ein in Fahrtrichtung der landwirtschaftlichen Spritzvorrichtung hinterer Rand des Bildauswertebereichs in Abhängigkeit von einer Geschwindigkeit der landwirtschaftlichen Spritzvorrichtung in Fahrtrichtung mittels der Steuereinheit gewählt wird. Durch diese Maßnahme kann der Reaktionsweg, d.h. der Abstand zwischen dem Bildauswertebereich und der Spritzdüseneinheit erhöht werden, sodass die maximale Fahrgeschwindigkeit weiter erhöht werden kann.

### Zeichnungen

Die Erfindung wird nachstehend anhand der beigefügten Zeichnungen beispielhaft näher erläutert. Es zeigen:
- Fig. 1: eine schematische Darstellung einer erfindungsgemäßen landwirtschaftlichen Spritzvorrichtung;
- Fig. 2: eine schematische Darstellung einer grundsätzlichen geometrischen Anordnung von optischer Erfassungseinheit und Spritzdüseneinheit zueinander;
- Fig. 3: eine schematische Darstellung einer erhaltenen Bildinformation mit einem tiefenvariablen Bildauswerteabschnitt; und
- Fig. 4: ein Ablaufdiagramm eines Verfahrens gemäß einem Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

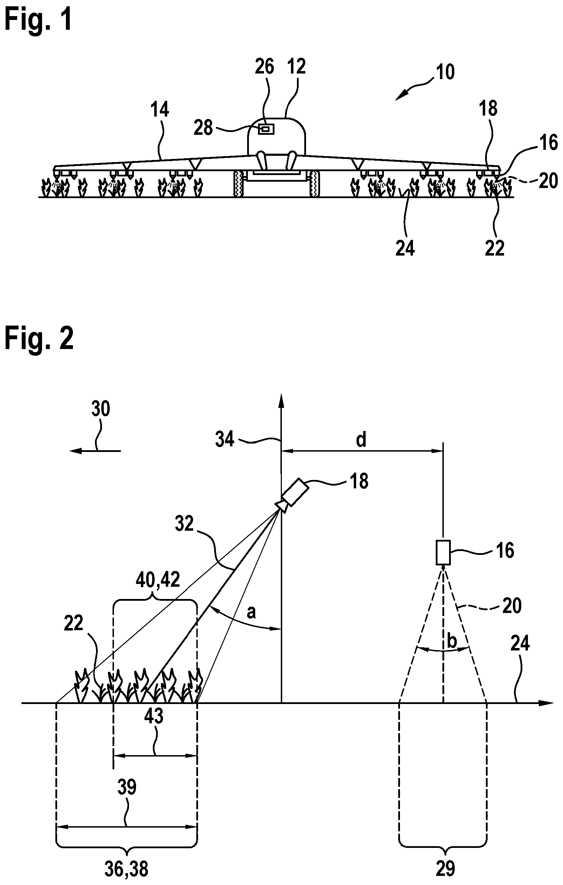

In Fig. 1 ist eine schematische Darstellung einer landwirtschaftlichen Spritzvorrichtung dargestellt, welche in ihrer Gesamtheit mit dem Bezugszeichen 10 versehen ist.

Die landwirtschaftliche Spritzvorrichtung 10 ist als Feldspritze 10 ausgebildet. Die Feldspritze 10 ist an einem mobilen Landfahrzeug 12 angeordnet, welches als Zugmaschine 12 bzw. Traktor 12 ausgebildet ist.

Die landwirtschaftliche Spritzvorrichtung 10 weist ein Spritzgestänge 14 auf. An dem Spritzgestänge 14 sind Spritzdüseneinheiten 16 und optische Erfassungseinheiten 18 angeordnet. Die Spritzdüseneinheiten 16 sind ausgebildet ein Spritzmittel 20 auf Pflanzen 22 bzw. Beikräuter 22 einer landwirtschaftlichen Fläche 24 auszubringen. Die optische Erfassungseinheiten 18 sind als optische Kameras 18 ausgebildet. Die optischen Kameras 18 umfassen jeweils eine Filtereinheit, um einen Farbanteil wie beispielsweise den grünen Farbanteil einer erhaltenen bzw. erfassten Bildinformation bzw. eines erfassten Bildes zu extrahieren, um Pflanzen 22 bzw. Beikräuter 22 zu erfassen.

Die landwirtschaftliche Spritzvorrichtung 10 weist ferner eine (nicht gezeigte) Fördereinheit auf, mittels derer die Ausbringmenge bzw. eine Wirkmittelmenge in dem auszubringenden Spritzmittel 20 einstellbar bzw. variierbar ist.

Die landwirtschaftliche Spritzvorrichtung 10 weist außerdem eine Steuereinheit 26 auf, welche mit den optischen Kameras 18 verbunden ist, um Informationen von diesen zu empfangen. Die Steuereinheit 26 weist eine Recheneinheit 28 auf, welche ausgebildet ist, Berechnungsschritte bzw. Bildverarbeitungsschritte zur Durchführung des erfindungsgemäßen Verfahrens auszuführen. Die Steuereinheit 26 ist ferner ausgebildet, ein Steuersignal derart auszugeben, dass das Spritzmittel 20 in Abhängigkeit von der ermittelten Pflanzenkennzahl mittels der Spritzdüseneinheiten 16 ausgebracht wird.

Fig. 2 zeigt eine grundsätzliche geometrische Anordnung einer Spritzdüseneinheit 16, welche im Fall einer positiven Spritzentscheidung das Spritzmittel 20 auf einen Spritzbereich 29 ausbringt, und einer geneigten optischen Erfassungseinheit 18 bzw. Kamera 18 auf der landwirtschaftlichen Spritzvorrichtung 10. Der Neigungswinkel a ist hierbei der Winkel in Fahrtrichtung 30 der Spritzvorrichtung 10 zwischen einer optischen Achse 32 der Kamera 18 und einer Vertikalen 34.

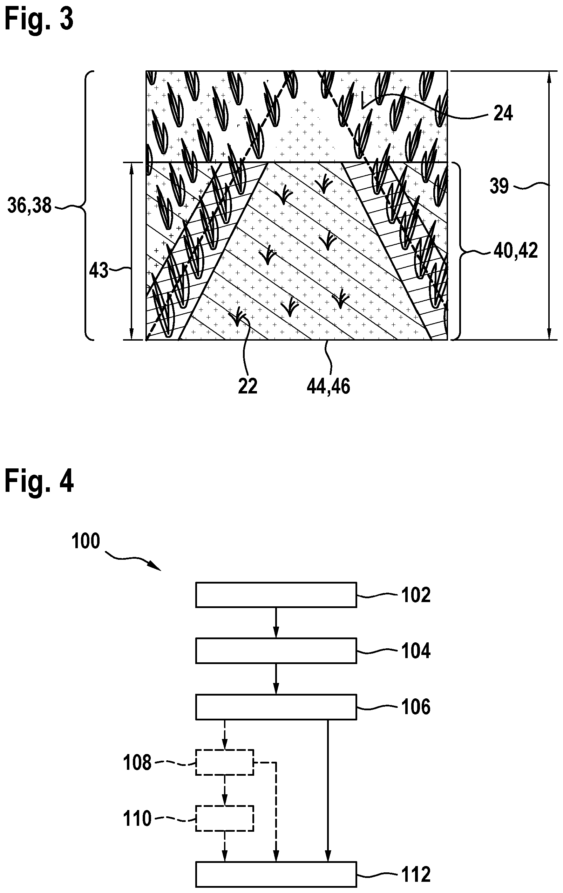

Wie aus Fig. 2 und 3 ersichtlich, wird mittels der optischen Erfassungseinheit 18 ein Feldabschnitt 36 der landwirtschaftlichen Fläche 24 erfasst, um eine Bildinformation 38 von dem Feldabschnitt 36 mit einer in Fahrtrichtung 30 Tiefe T(Bild) 39 zu erhalten. Anschließend werden die Pflanzen 22 in einem Bildauswertebereich 40 der erhaltenen Bildinformation 38 identifiziert, wobei der Bildauswertebereich 40 einen entsprechenden Feldauswertebereich 42 des erfassten Feldabschnitts 36 mit einer in Fahrtrichtung 30 der Spritzvorrichtung 10 Tiefe T(Auswerte) 43 repräsentiert. Erfindungsgemäß ist die Tiefe T(Auswerte) 43 des Bildauswertebereichs 40 variabel und wird mittels der Steuereinheit 26 in Abhängigkeit von einer Fahrgeschwindigkeit der Spritzvorrichtung 10 gewählt bzw. angepasst. Hierbei fluchtet ein in Fahrtrichtung 30 hinterer Rand 44 des tiefenvariablen Bildauswertebereichs 40 mit einem hinteren Rand 46 der Bildinformation 38. In Abhängigkeit von den im Bildauswertebereich 40 identifizierten Pflanzen 22 wird dann mittels der Spritzdüseneinheit 16 das Spritzmittel 20 auf den Feldauswertebereich 42 des erfassten Feldabschnitts 38 flächig ausgebracht.

Fig. 4 zeigt ein Ablaufdiagramm eines Verfahrens 100 zum Ausbringen eines Spritzmittels 20 auf eine landwirtschaftliche Fläche 24 mittels zumindest einer Spritzdüseneinheit 16 einer landwirtschaftlichen Spritzvorrichtung 10. Das Verfahren umfasst einen Schritt des Erfassens 102 eines Feldabschnitts 36 der landwirtschaftlichen Fläche 24 mittels zumindest einer optischen Erfassungseinheit 18, um eine Bildinformation 38 von dem Feldabschnitt 36 mit einer in Fahrtrichtung 30 der Spritzvorrichtung 10 Tiefe T(Bild) 39 zu erhalten. Das Verfahren 100 umfasst ferner einen Schritt des Wählens 104 einer variablen Tiefe T(Auswerte) 43 des Bildauswertebereichs 40 mittels der Steuereinheit 26. Das Verfahren 100 umfasst ferner einen Schritt des Identifizierens 106 von Pflanzen 22 in dem Bildauswertebereich 40 der erhaltenen Bildinformation 38 mittels der Steuereinheit 26, wobei der Bildauswertebereich 40 einen entsprechenden Feldauswertebereich 42 des erfassten Feldabschnitts 36 mit einer in Fahrtrichtung 30 der Spritzvorrichtung 10 Tiefe T(Auswerte) 43 repräsentiert. Das Verfahren 100 umfasst des Weiteren einen Schritt des Ausbringens 112 des Spritzmittels 20 auf den Feldauswertebereich 42 des erfassten Feldabschnitts 36 in Abhängigkeit von den im Bildauswertebereich 40 identifizierten Pflanzen 22 mittels der Spritzdüseneinheit 16 der landwirtschaftlichen Spritzvorrichtung 10.

Das Verfahren 100 umfasst ferner einen optionalen Schritt des Ermittelns 108 einer Pflanzenkennzahl für den tiefenvariablen Bildauswertebereich 40 unter Verwendung der identifizierten Pflanzen 22 in dem tiefenvariablen Bildauswertebereich 40 mittels der Steuereinheit, wobei im Schritt des Ausbringens 112 das Spritzmittel 20 auf den Feldauswertebereich 42 in Abhängigkeit von der ermittelten Pflanzenkennzahl, insbesondere bei Erreichung und/oder Unterschreitung und/oder Überschreitung eines definierten Schwellenwertes für die Pflanzenkennzahl ausgebracht wird. Alternativ oder zusätzlich umfasst das Verfahren 100 umfasst einen optionalen Schritt des Identifizierens 110 von Pflanzenreihen in dem tiefenvariablen Bildauswertebereich 40 und/oder der Bildinformation 38 unter Verwendung der identifizierten Pflanzen 22 mittels der Steuereinheit 26, wobei im Schritt des Ausbringens 112 das Spritzmittel 20 ferner in Abhängigkeit von identifizierten Pflanzenreihen ausgebracht wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Ausbringen eines Spritzmittels (20) auf eine landwirtschaftliche Fläche (24) mittels zumindest einer Spritzdüseneinheit (16) einer landwirtschaftlichen Spritzvorrichtung (10), mit den Schritten:
- Erfassen (102) eines Feldabschnitts (36) der landwirtschaftlichen Fläche (24) mittels zumindest einer optischen Erfassungseinheit (18), um eine Bildinformation (38) von dem Feldabschnitt (36) mit einer in Fahrtrichtung (30) der Spritzvorrichtung (10) Tiefe T(Bild) (39) zu erhalten;
- Identifizieren (106) von Pflanzen (22) in einem Bildauswertebereich (40) der erhaltenen Bildinformation (38) mittels einer Steuereinheit (26), wobei der Bildauswertebereich (40) einen entsprechenden Feldauswertebereich (42) des erfassten Feldabschnitts (36) mit einer in Fahrtrichtung (30) der Spritzvorrichtung (10) Tiefe T(Auswerte) (43) repräsentiert; und
- Ausbringen (112) des Spritzmittels (20) auf den Feldauswertebereich (42) des erfassten Feldabschnitts (36) in Abhängigkeit von den im Bildauswertebereich (40) identifizierten Pflanzen (22) mittels der Spritzdüseneinheit (16) der landwirtschaftlichen Spritzvorrichtung (10),
**gekennzeichnet durch** den weiteren Schritt:
- Wählen (104) einer variablen Tiefe T(Auswerte) (43) des Bildauswertebereichs (40) mittels der Steuereinheit (26).

2. Verfahren (100) nach Anspruch 1, **dadurch gekennzeichnet, dass** die Tiefe T(Auswerte) (43) des tiefenvariablen Bildauswertebereichs (40) in Abhängigkeit von einer Geschwindigkeit der landwirtschaftlichen Spritzvorrichtung (10) in Fahrtrichtung (30) mittels der Steuereinheit (26) gewählt wird.

3. Verfahren (100) nach Anspruch 1 oder 2, **dadurch gekennzeichnet, dass** die Tiefe T(Auswerte) (43) des tiefenvariablen Bildauswertebereichs (40) in Abhängigkeit von einer Bildrate erfasster Feldabschnitte (36) und/oder eine Temperatur der Steuereinheit (26) zusammenhängenden Größe mittels der Steuereinheit (26) gewählt wird.

4. Verfahren (100) nach einem der vorhergehenden Ansprüche, **dadurch gekennzeichnet, dass** ein in Fahrtrichtung (30) der landwirtschaftlichen Spritzvorrichtung (10) hinterer Rand (44) des tiefenvariablen Bildauswertebereichs (40) mit einem in Fahrtrichtung (30) der landwirtschaftlichen Spritzvorrichtung (10) hinteren Rand (46) der Bildinformation (38) fluchtet.

5. Verfahren (100) nach einem der Ansprüche 1 bis 3, **dadurch gekennzeichnet, dass** ein in Fahrtrichtung (30) der landwirtschaftlichen Spritzvorrichtung (10) hinterer Rand (44) des tiefenvariablen Bildauswertebereichs (40) in Abhängigkeit von einer Geschwindigkeit der landwirtschaftlichen Spritzvorrichtung (10) in Fahrtrichtung (30) mittels der Steuereinheit (26) gewählt wird.

6. Verfahren (100) nach einem der vorhergehenden Ansprüche, **dadurch gekennzeichnet, dass** der tiefenvariable Bildauswertebereich (40) eine minimale Tiefe T(Auswerte,min) von 20% und/oder eine maximale Tiefe T(Auswerte,max) von 100% der Tiefe T(Bild) (39) der Bildinformation aufweist.

7. Verfahren (100) nach einem der vorhergehenden Ansprüche, **dadurch gekennzeichnet, dass** eine Breite B(Auswerte) des tiefenvariablen Bildauswertebereichs (40) kleiner ist als eine Breite B(Bild) der Bildinformation.

8. Verfahren (100) nach einem der vorhergehenden Ansprüche, **dadurch gekennzeichnet, dass** der Feldabschnitt (36) mit einem Neigungswinkel (a) einer optischen Achse (32) der optischen Erfassungseinheit (18) von größer 0° relativ zu der Vertikalen (34) in Fahrtrichtung (34) der Spritzvorrichtung (10) erfasst wird.

9. Verfahren (100) nach einem der vorhergehenden Ansprüche,
**gekennzeichnet durch** einen Schritt des Ermittelns (108) einer Pflanzenkennzahl für den tiefenvariablen Bildauswertebereich (40) unter Verwendung der identifizierten Pflanzen (22) in dem tiefenvariablen Bildauswertebereich (40) mittels der Steuereinheit, wobei im Schritt des Ausbringens (112) das Spritzmittel (20) auf den Feldauswertebereich (42) in Abhängigkeit von der ermittelten Pflanzenkennzahl, insbesondere bei Erreichung und/oder Unterschreitung und/oder Überschreitung eines definierten Schwellenwertes für die Pflanzenkennzahl ausgebracht wird.

10. Verfahren (100) nach Anspruch 9, **dadurch gekennzeichnet, dass** die Pflanzenkennzahl einen Bedeckungsgrad des Feldauswertebereichs (42) von pflanzlichem Material und/oder eine Menge an pflanzlichem Material in dem jeweiligen Feldauswertebereich (42) und/oder eine Anzahl von identifizierten Pflanzen (22) in dem Feldauswertebereich (42) repräsentiert.

11. Verfahren (100) nach einem der vorhergehenden Ansprüche,
**gekennzeichnet durch** einen Schritt des Identifizierens (110) von Pflanzenreihen in dem tiefenvariablen Bildauswertebereich (40) und/oder der Bildinformation (38) unter Verwendung der identifizierten Pflanzen (22) in der gesamten Bildinformation (38) mittels der Steuereinheit (26), wobei im Schritt des Ausbringens (112) das Spritzmittel (20) ferner in Abhängigkeit von identifizierten Pflanzenreihen ausgebracht wird.

12. Steuereinheit (26) die dazu eingerichtet ist, folgende Schritte durchzuführen und/oder zu steuern:
- Identifizieren (106) von Pflanzen (22) in einem Bildauswertebereich (40) einer erhaltenen Bildinformation (38) eines erfassten Feldabschnitts (36) einer landwirtschaftlichen Fläche (24) mit einer in Fahrtrichtung (30) einer Spritzvorrichtung (10) Tiefe T(Bild) (39), wobei der Bildauswertebereich (40) einen entsprechenden Feldauswertebereich (42) des erfassten Feldabschnitts (36) mit einer in Fahrtrichtung (30) der Spritzvorrichtung (10) Tiefe T(Auswerte) (43) repräsentiert;
- Ausgeben eines Steuersignals an zumindest eine Spritzdüseneinheit (16) einer landwirtschaftlichen Spritzvorrichtung (10) in Abhängigkeit von den im Bildauswertebereich (40) identifizierten Pflanzen (22), um das Spritzmittel (20) auf den Feldauswertebereich (42) des erfassten Feldabschnitts (36) auszubringen,
**dadurch gekennzeichnet, dass** die Steuereinheit (26) ferner dazu eingerichtet ist, folgenden weiteren Schritt durchzuführen und/oder zu steuern:
- Wählen (104) einer variablen Tiefe T(Auswerte) (43) des Bildauswertebereichs (40), insbesondere in Abhängigkeit von einer Geschwindigkeit der landwirtschaftlichen Spritzvorrichtung (10) in Fahrtrichtung (30).

13. Landwirtschaftliche Spritzvorrichtung (10) zum Ausbringen eines Spritzmittels (20) auf eine landwirtschaftliche Fläche (24) mit zumindest einer Spritzdüseneinheit (16), zumindest einer optischen Erfassungseinheit (18), insbesondere wobei eine optische Achse (36) der optischen Erfassungseinheit (18) einen Neigungswinkel (a) größer 0° relativ zu der Vertikalen (38) in Fahrtrichtung (34) der Spritzvorrichtung (10) aufweist, und einer Steuereinheit (26) nach Anspruch 12.

14. Computerprogramm das dazu eingerichtet ist, die Schritte eines Verfahrens nach einem der Ansprüche 1 bis 11 und/oder einer Steuereinheit (26) nach Anspruch 12 auszuführen und/oder zu steuern, wenn das Computerprogramm auf einem Computer ausgeführt wird.

15. Maschinenlesbares Speichermedium mit dem darauf gespeicherten Computerprogramm nach Anspruch 14.

## Claims

1. Method (100) for applying a spray (20) to an agricultural area (24) by means of at least one spray nozzle unit (16) of an agricultural spraying device (10), having the steps of:
- capturing (102) a field section (36) of the agricultural area (24) by means of at least one optical capture unit (18) in order to obtain image information (38) from the field section (36) with a depth T(image) (39) in the direction of travel (30) of the spraying device (10);
- identifying (106) plants (22) in an image evaluation area (40) of the obtained image information (38) by means of a control unit (26), wherein the image evaluation area (40) represents a corresponding field evaluation area (42) of the captured field section (36) with a depth T(evaluate) (43) in the direction of travel (30) of the spraying device (10); and
- applying (112) the spray (20) to the field evaluation area (42) of the captured field section (36) by means of the spray nozzle unit (16) of the agricultural spraying device (10) on the basis of the plants (22) identified in the image evaluation area (40) ,
**characterized by** the further step of:
- selecting (104) a variable depth T(evaluate) (43) of the image evaluation area (40) by means of the control unit (26).

2. Method (100) according to Claim 1, **characterized in that** the depth T(evaluate) (43) of the variable-depth image evaluation area (40) is selected by means of the control unit (26) depending on a speed of the agricultural spraying device (10) in the direction of travel (30) .

3. Method (100) according to Claim 1 or 2, **characterized in that** the depth T(evaluate) (43) of the variable-depth image evaluation area (40) is selected by means of the control unit (26) depending on an image rate of captured field sections (36) and/or a variable related to a temperature of the control unit (26).

4. Method (100) according to any one of the preceding claims, **characterized in that** a rear edge (44) of the variable-depth image evaluation area (40) in the direction of travel (30) of the agricultural spraying device (10) is aligned with a rear edge (46) of the image information (38) in the direction of travel (30) of the agricultural spraying device (10).

5. Method (100) according to any one of Claims 1 to 3, **characterized in that** a rear edge (44) of the variable-depth image evaluation area (40) in the direction of travel (30) of the agricultural spraying device (10) is selected by means of the control unit (26) depending on a speed of the agricultural spraying device (10) in the direction of travel (30).

6. Method (100) according to any one of the preceding claims, **characterized in that** the variable-depth image evaluation area (40) has a minimum depth T(evaluate,min) of 20% and/or a maximum depth T(evaluate,max) of 100% of the depth T(image) (39) of the image information.

7. Method (100) according to any one of the preceding claims, **characterized in that** a width B(evaluate) of the variable-depth image evaluation area (40) is smaller than a width B(image) of the image information.

8. Method (100) according to any one of the preceding claims, **characterized in that** the field section (36) is captured with an angle of inclination (a) of an optical axis (32) of the optical capture unit (18) of greater than 0° relative to the vertical (34) in the direction of travel (34) of the spraying device (10).

9. Method (100) according to any one of the preceding claims, **characterized by** a step of determining (108) a plant metric for the variable-depth image evaluation area (40) using the identified plants (22) in the variable-depth image evaluation area (40) by means of the control unit, wherein, in the step of application (112), the spray (20) is applied to the field evaluation area (42) depending on the determined plant metric, in particular upon reaching and/or falling below and/or exceeding a defined threshold value for the plant metric.

10. Method (100) according to Claim 9, **characterized in that** the plant metric represents a degree of coverage of the field evaluation area (42) with plant material and/or an amount of plant material in the respective field evaluation area (42) and/or a number of identified plants (22) in the field evaluation area (42).

11. Method (100) according to any one of the preceding claims, **characterized by** a step of identifying (110) rows of plants in the variable-depth image evaluation area (40) and/or the image information (38) by means of the control unit (26) by using the identified plants (22) in the entirety of the image information (38), the step of application (112) involving the spray (20) further being applied on the basis of identified rows of plants.

12. Control unit (26) configured to perform and/or control the following steps:
- identifying (106) plants (22) in an image evaluation area (40) of obtained image information (38) relating to a captured field section (36) of an agricultural area (24) having a depth T(image) (39) in the direction of travel (30) of a spraying device (10), wherein the image evaluation area (40) represents a corresponding field evaluation area (42) of the captured field section (36) with a depth T(evaluate) (43) in the direction of travel (30) of the spraying device (10);
- outputting a control signal to at least one spray nozzle unit (16) of an agricultural spraying device (10) depending on the plants (22) identified in the image evaluation area (40) in order to apply the spray (20) to the field evaluation area (42) of the captured field section (36),
**characterized in that** the control unit (26) is also configured to perform and/or control the following further step:
- selecting (104) a variable depth T(evaluate) (43) of the image evaluation area (40), in particular depending on the speed of the agricultural spraying device (10) in the direction of travel (30).

13. Agricultural spraying device (10) for applying a spray (20) to an agricultural area (24) using at least one spray nozzle unit (16), at least one optical capture unit (18), in particular wherein an optical axis (36) of the optical capture unit (18) has an angle of inclination (a) greater than 0° relative to the vertical (38) in the direction of travel (34) of the spraying device (10), and a control unit (26) according to Claim 12.

14. Computer program configured to execute and/or to control the steps of a method according to any one of Claims 1 to 11 and/or a control unit (26) according to Claim 12 when the computer program is executed on a computer.

15. Machine-readable storage medium with the computer program according to Claim 14 stored thereon.

## Revendications

1. Procédé (100) destiné à appliquer un agent de pulvérisation (20) sur une surface agricole (24) au moyen d'au moins une unité à buse de pulvérisation (16) d'un dispositif de pulvérisation agricole (10), comprenant les étapes consistant à :
- détecter (102) une section de champ (36) de la surface agricole (24) au moyen d'au moins une unité de détection optique (18) afin d'obtenir des informations d'image (38) sur la section de champ (36) ayant une profondeur T(image) (39) dans la direction de déplacement (30) du dispositif de pulvérisation (10) ;
- Identifier (106) des plantes (22) dans une zone d'évaluation d'image (40) des informations d'image obtenues (38) au moyen d'une unité de commande (26), la zone d'évaluation d'image (40) représentant une zone d'évaluation de champ (42) correspondante de la section de champ détectée (36) ayant une profondeur T(évaluation) (43) dans la direction de déplacement (30) du dispositif de pulvérisation (10) ; et
- appliquer (112) l'agent de pulvérisation (20) au moyen de l'unité à buse de pulvérisation (16) du dispositif de pulvérisation agricole (10) sur la zone d'évaluation de champ (42) de la section de champ détectée (36) en fonction des plantes (22) identifiées dans la zone d'évaluation d'image (40),
**caractérisé par** l'étape supplémentaire consistant à :
- sélectionner (104) une profondeur variable T(évaluation) (43) de la zone d'évaluation d'image (40) au moyen de l'unité de commande (26).

2. Procédé (100) selon la revendication 1, **caractérisé en ce que** la profondeur T(évaluation) (43) de la zone d'évaluation d'image (40) variable en profondeur est sélectionnée au moyen de l'unité de commande (26) en fonction d'une vitesse du dispositif de pulvérisation agricole (10) dans la direction de déplacement (30).

3. Procédé (100) selon la revendication 1 ou 2, **caractérisé en ce que** la profondeur T(évaluation) (43) de la zone d'évaluation d'image (40) variable en profondeur est sélectionnée au moyen de l'unité de commande (26) en fonction d'une cadence d'image de sections de champ détectées (36) et/ou d'une grandeur liée à une température de l'unité de commande (26).

4. Procédé (100) selon l'une quelconque des revendications précédentes, **caractérisé en ce qu'**un bord arrière (44) de la zone d'évaluation d'image (40) variable en profondeur dans la direction de déplacement (30) du dispositif de pulvérisation agricole (10) est aligné avec un bord arrière (46) des informations d'image (38) dans la direction de déplacement (30) du dispositif de pulvérisation agricole (10).

5. Procédé (100) selon l'une quelconque des revendications 1 à 3, **caractérisé en ce qu'**un bord arrière (44) de la zone d'évaluation d'image (40) variable en profondeur dans la direction de déplacement (30) du dispositif de pulvérisation agricole (10) est sélectionné au moyen de l'unité de commande (26) en fonction d'une vitesse du dispositif de pulvérisation agricole (10) dans la direction de déplacement (30).

6. Procédé (100) selon l'une quelconque des revendications précédentes, **caractérisé en ce que** la zone d'évaluation d'image (40) variable en profondeur présente une profondeur minimale T(évaluation,min) de 20 % et/ou une profondeur maximale T(évaluation,max) de 100 % de la profondeur T(image) (39) des informations d'image.

7. Procédé (100) selon l'une quelconque des revendications précédentes, **caractérisé en ce qu'**une largeur B(évaluation) de la zone d'évaluation d'image (40) variable en profondeur est inférieure à une largeur B(image) des informations d'image.

8. Procédé (100) selon l'une quelconque des revendications précédentes, **caractérisé en ce que** les sections de champ (36) sont détectées avec un angle d'inclinaison (a) d'un axe optique (32) de l'unité de détection optique (18) qui est supérieur à 0° par rapport à la verticale (34) dans la direction de déplacement (34) du dispositif de pulvérisation (10).

9. Procédé (100) selon l'une quelconque des revendications précédentes, **caractérisé par** une étape consistant à déterminer (108) un nombre caractéristique de plantes pour la zone d'évaluation d'image (40) variable en profondeur au moyen de l'unité de commande par utilisation des plantes identifiées (22) dans la zone d'évaluation d'image (40) variable en profondeur, l'agent de pulvérisation (20) étant appliqué sur la zone d'évaluation de champ (42), lors de l'étape d'application (112), en fonction du nombre caractéristique de plantes déterminé, en particulier lorsqu'une valeur de seuil définie du nombre caractéristique de plantes est atteinte et/ou dépassée.

10. Procédé (100) selon la revendication 9, **caractérisé en ce que** le nombre caractéristique de plantes représente un degré de couverture de la zone d'évaluation d'image (42) par du matériel végétal et/ou une quantité de matériel végétal dans la zone d'évaluation d'image (42) et/ou un nombre de plantes identifiées (22) dans la zone d'évaluation d'image (42).

11. Procédé (100) selon l'une quelconque des revendications précédentes, **caractérisé par** une étape consistant à identifier (110) des rangées de plantes dans la zone d'évaluation d'image (40) variable en profondeur et/ou dans les informations d'image (38) par utilisation des plantes identifiées (22) dans l'ensemble des informations d'image (38) au moyen de l'unité de commande (26), l'agent de pulvérisation (20), lors de l'étape d'application (112), étant en outre appliqué en fonction des rangées de plantes identifiées.

12. Unité de commande (26) qui est conçue pour exécuter et/ou commander les étapes suivantes :
- identifier (106) les plantes (22) dans une zone d'évaluation d'image (40) des informations d'image obtenues (38) d'une section de champ détectée (36) d'une surface agricole (24) ayant une profondeur T(image) (39) dans la direction de déplacement (30) d'un dispositif de pulvérisation (10), la zone d'évaluation d'image (40) représentant une zone d'évaluation de champ (42) correspondante de la section de champ détectée (36) ayant une profondeur T(évaluation) (43) dans la direction de déplacement (30) du dispositif de pulvérisation (10) ;
- délivrer un signal de commande à au moins une unité à buse de pulvérisation (16) d'un dispositif de pulvérisation agricole (10) en fonction des plantes (22) identifiées dans la zone d'évaluation d'image (40) pour appliquer l'agent de pulvérisation (20) sur la zone d'évaluation de champ (42) de la section de champ détectée (36),
**caractérisé en ce que** l'unité de commande (26) est en outre conçue pour exécuter et/ou commander l'étape supplémentaire suivante :
- sélectionner (104) une profondeur T(évaluation) (43) variable de la zone d'évaluation d'image (40), en particulier en fonction d'une vitesse du dispositif de pulvérisation agricole (10) dans la direction de déplacement (30).

13. Dispositif de pulvérisation agricole (10) destiné à appliquer un agent de pulvérisation (20) sur une surface agricole (24), comprenant au moins une unité à buse de pulvérisation (16), au moins une unité de détection optique (18), un axe optique (36) de l'unité de détection optique (18) présentant en particulier un angle d'inclinaison (a) supérieur à 0° par rapport à la verticale (38) dans la direction de déplacement (34) du dispositif de pulvérisation (10), et une unité de commande (26) selon la revendication 12.

14. Programme d'ordinateur qui est conçu pour exécuter ou commander les étapes d'un procédé selon l'une quelconque des revendications 1 à 11 et/ou d'une unité de commande (26) selon la revendication 12 lorsque le programme d'ordinateur est exécuté sur un ordinateur.

15. Support de stockage lisible par machine sur lequel est stocké un programme d'ordinateur selon la revendication 14.
